# EUROPÄISCHE PATENTSCHRIFT

(11) **EP 1 903 066 B1**
(45) Veröffentlichungstag und Bekanntmachung des Hinweises auf die Patenterteilung: **18.11.2009**
(21) Anmeldenummer: 07017851.2
(22) Anmeldetag: 12.09.2007
(51) Int. Cl.: C08G 18/28, C08G 18/42, C08G 18/79

(54) **Polyurethan-Pulverlack**
Polyurethane powder lacquer
Laque en poudre de polyuréthane

(30) Priorität: 23.09.2006 DE 102006045003
(43) Veröffentlichungstag der Anmeldung: 26.03.2008
(73) Patentinhaber: Bayer MaterialScience AG, 51368 Leverkusen (DE)
(72) Erfinder: Grahl, Michael, 51371 Leverkusen (DE); Laas, Hans-Josef, 51519 Odenthal (DE); Greszta-Franz, Dorota, 42659 Solingen (DE); Halpaap, Reinhard, 51519 Odenthal (DE)

(56) Entgegenhaltungen:
- EP-A- 0 669 354
- EP-A- 1 443 064
- EP-A- 1 526 146
- EP-A- 1 526 147

## Beschreibung

Unter dem Druck einer immer strengeren Umweltgesetzgebung gewann in den letzten Jahren die Entwicklung von Pulverlacken neben high-solids-Lacken und wässrigen Beschichtungssystemen zunehmend an Bedeutung. Pulverlacke setzen bei der Applikation keinerlei schädliche Lösemittel frei, lassen sich mit sehr hohem Materialausnutzungsgrad verarbeiten und gelten daher als besonders umweltfreundlich und wirtschaftlich.

Qualitativ besonders hochwertige, licht- und wetterbeständige Beschichtungen lassen sich mit hitzehärtbaren Pulverlacken auf Polyurethanbasis herstellen. Die heute im Markt etablierten Polyurethan-(PUR)-Pulverlacke bestehen im allgemeinen aus festen Polyesterpolyolen, die mit festen blockierten aliphatischen oder meist cycloaliphatischen Polyisocyanaten ausgehärtet werden. Diese Systeme weisen allerdings den Nachteil auf, dass bei der thermischen Vernetzung die als Blockierungsmittel eingesetzten Verbindungen abgespalten werden und überwiegend entweichen. Deshalb müssen bei ihrer Verarbeitung aus apparativen Gründen sowie aus Gründen der Ökologie und Arbeitshygiene besondere Vorkehrungen zur Reinigung der Abluft und/oder Wiedergewinnung des Blockierungsmittels getroffen werden.

Eine Möglichkeit, die Emission von Blockierungsmitteln zu umgehen, stellen die bekannten Uretdiongruppen aufweisenden PUR-Pulverlackvernetzer dar (z.B. DE-A 2 312 391, DE-A 2 420 475, EP-A 0 045 994, EP-A 0 045 996, EP-A 0 045 998, EP-A 0 639 598 oder EP-A 0 669 353). Als Vernetzungsprinzip wird bei diesen Produkten die thermische Rückspaltung von Uretdiongruppen in freie Isocyanatgruppen und deren Reaktion mit dem hydroxyfunktionellen Bindemittel genutzt. In der Praxis finden Uretdionpulverlackvernetzer bis heute allerdings nur wenig Verwendung. Die Ursache hierfür liegt in der vergleichsweise geringen Reaktivität der intern blockierten Isocyanatgruppen, die in der Regel Einbrenntemperaturen von mindestens 160°C erforderlich macht.

Obwohl bekannt ist, dass die Aufspaltung von Uretdiongruppen insbesondere in Gegenwart hydroxylgruppenhaltiger Reaktionspartner bereits ab etwa 100°C merklich einsetzt, verläuft die Reaktion in diesem Temperaturbereich noch derart langsam, dass zur vollständigen Aushärtung von Lackfilmen für einen praktischen Einsatz unrealistisch lange Zeiten von mehreren Stunden benötigt werden. Zwar werden in der DE-A 2 420 475, der DE-A 2 502 934 oder EP-A 0 639 598 als mögliche Einbrennbedingungen für uretdiongruppenhaltige Pulverlacksysteme bereits Temperaturen ab 110°C, in der DE-A 2 312 391 sogar Temperaturen ab 90°C genannt, die konkret beschriebenen Ausführungsbeispiele zeigen allerdings, dass sich auch mit den in diesen Veröffentlichungen beschriebenen Pulverlacken ausreichend vernetzte Beschichtungen unter praxisnahen Einbrennzeiten von maximal 30 min erst ab Temperaturen von 150 bis 160°C erhalten lassen. Auf welche Weise man Pulverlacke bereitstellen kann, die tatsächlich bereits bei Temperaturen unterhalb von 150°C bis 160°C in gewerblich nutzbarem Umfang vollständig ausgehärtet werden können, wird in diesen Publikationen nicht offenbart.

Es hat nicht an Versuchen gefehlt, die Aushärtung von uretdionvernetzenden PUR-Pulverlacken durch Mitverwendung geeigneter Katalysatoren zu beschleunigen. Zu diesem Zweck wurden bereits unterschiedliche Verbindungen vorgeschlagen, beispielsweise die aus der Polyurethanchemie bekannten metallorganischen Katalysatoren, wie Zinn(II)-acetat, Zinn(II)-octoat, Zinn(II)-ethylcaproat, Zinn(II)-laurat, Dibutylzinndiacetat, Dibutylzinndilaurat, Dibutylzinnmaleat (z.B. EP-A 0 045 994, EP-A 0 045 998, EP-A 0 601 079, WO 91/07452 oder DE-A 2 420 475), Eisen(III)-chlorid, Zinkchlorid, Zink-2-ethylcaproat und Molybdänglykolat, tertiäre Amine, wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan und N,N'-Dimethylpiperazin (z.B. EP-A 0 639 598) oder N,N,N'-trisubstituierte Amidine, insbesondere bicyclische Amidine, wie 1,5-Diazabicyclo[4.3.0]non-5-en (DBN) (z.B. EP-A 0 803 524).

Von diesen Katalysatoren erlauben die genannten bicyclischen Amidine die niedrigsten Einbrenntemperaturen. Sie führen gleichzeitig jedoch zu einer für viele Anwendungsbereiche unakzeptabel hohen Einbrennvergilbung. Aus diesem Grund konnten sich Amidin-katalysierte Uretdionsysteme bisher nicht im Markt durchsetzen.

In jüngster Zeit wurden weitere Fortschritte bei der Absenkung der Einbrenntemperatur von Uretdionpulverlacken erzielt.

Nach der Lehre der EP-A 1 137 689 werden Lewissäure-Katalysatoren, wie z.B. die vorstehend genannten Zinn- oder Zinkverbindungen, durch saure Gruppen, wie z.B. Carboxylgruppen, inhibiert. Ihre volle katalytische Aktivität können sie in einem Uretdionpulverlacksystem daher nur entfalten, wenn das eingesetzte hydroxyfunktionelle Bindemittel frei von Carboxylgruppen ist. Aus diesem Grund wird den in dieser Veröffentlichung beschriebenen Pulverlacken, die aus üblichen hydroxyfunktionellen Bindemitteln, Uretdiongruppen enthaltenden Vernetzern und speziellen Lewissäurekatalysatoren bestehen, eine ausreichende Menge eines gegenüber Carboxylgruppen reaktiven Agens, beispielsweise eines Epoxids, zugesetzt, um im Bindemittel gegebenenfalls noch vorhandene Carboxylgruppen möglichst vollständig umzusetzen und so aus dem System zu entfernen. Auf diese Weise lässt sich die Reaktivität der Polyurethanpulver zwar so weit steigern, dass die Aushärtung bereits ab einer Temperatur von ca. 120°C einsetzt, die dabei erhältlichen Lackfilme zeigen aber ein völlig unzureichendes Verlaufsverhalten, was sich in einer starker Oberflächenstruktur und mangelndem Glanz niederschlägt. Zwar werden in der WO 2005/095482 verbesserte Lackrezepturen dieser Art beschrieben, die in Gegenwart von Zink-Katalysatoren bei niedrigen Temperaturen vernetzen und Beschichtungen mit akzeptablem Verlauf liefern, bei diesen ist man allerdings auf die Verwendung sehr spezieller hydroxyfunktioneller Bindemittel mit einem exakt definierten Restgehalt an Säuregruppen angewiesen.

Weitere Katalysatoren, mit denen sich in Abwesenheit von Carboxylgruppen bzw. unter Mitverwendung einer gegenüber Carboxylgruppen reaktiven Verbindung die Einbrenntemperatur von Uretdionpulverlacken ähnlich deutlich erniedrigen lassen wie mit den Lewissäure-Katalysatoren der EP-A 1 137 689 sind beispielsweise die in der EP-A 1 334 987 beschriebenen Ammoniumhydroxide und -fluoride, die in der EP-A 1 475 399 beschriebenen Ammoniumcarboxylate oder die in der EP-A 1 475 400 beschriebenen Metallhydroxide und -alkoholate. Auch diese Katalysatoren führen aber in der Regel zu Pulverlacken mit strukturierter Oberfläche und unzureichendem Glanz. Auch unter Verwendung spezieller uretdiongruppenhaltiger Vernetzerkomponenten, die mit 1,12-Dodecandiol als Kettenverlängerungsmittel hergestellt wurden (siehe z.B. EP-A 1 524 283 und EP-A 1 526 147), und/oder spezieller teilkristalliner Polyesterpolyole als Bindemittel (siehe z.B. WO 2005/105879 und WO 2005/105880) konnte das Problem der mangelhaften Optik hochreaktiver Uretdionpulverlacke bis heute nicht zufriedenstellend gelöst werden.

Aufgabe der vorliegenden Erfindung war es daher, neue abspalterfreie PUR-Pulverlacke auf Basis gut verfügbarer handelsüblicher Bindemittelkomponenten zur Verfügung zu stellen, die bei niedrigen Einbrenntemperaturen bzw. entsprechend kurzen Einbrennzeiten aushärten und dabei völlig vernetzte Lackfilme ergeben, die sich gegenüber den bisher bekannten, bei niedriger Temperatur härtbaren Uretdionpulverlacken durch deutlich verbesserte Oberflächeneigenschaften, insbesondere einen hervorragenden Verlauf, auszeichnen.

Diese Aufgabe konnte nun durch die Bereitstellung der nachfolgend näher beschriebenen, Monoalkohole enthaltenden Uretdionpulverlacke gelöst werden.

Die vorliegende Erfindung beruht auf der überraschenden Beobachtung, dass sich mit abspalterfreien PUR-Pulverlacken, bestehend aus Uretdionpulverlackvernetzern, üblichen hydroxyfunktionellen Bindemitteln, geeigneten, die Umsetzung von Uretdiongruppen mit Hydroxylgruppen beschleunigenden Katalysatoren und gegebenenfalls einer den im System vorliegenden Carboxylgruppen mindestens äquimolaren Menge einer gegenüber Carboxylgruppen reaktiven Verbindung, bereits bei Temperaturen ab 110°C Beschichtungen von hervorragendem Verlauf erhalten lassen, wenn den Pulverlacken zusätzlich eine definierte Menge eines festen Monoalkohols oder eines Monoalkoholgemisches zugesetzt wird. Die so erhältlichen Beschichtungen zeigen ungeachtet der durch den Monoalkoholzusatz bedingten Funktionalitätsemiedrigung des Bindemittels ausgezeichnete mechanische Eigenschaften und hohe Lösemittelbeständigkeiten.

Gegenstand der vorliegenden Erfindung ist ein Polyurethan-Pulverlack, enthaltend in Mischung
A) eine unterhalb von 40°C in fester und oberhalb von 130°C in flüssiger Form vorliegende hydroxyfunktionelle Bindemittelkomponente mit einer OH-Zahl von 15 bis 200 mg KOH/g, einem mittleren Molekulargewicht von 400 bis 10000 und einem Gehalt an Carboxylgruppen (berechnet als COOH; Molekulargewicht = 45) von bis zu 2,0 Gew.-%,
B) eine Uretdiongruppen und gegebenenfalls freie Isocyanatgruppen aufweisende Polyadditionsverbindung auf Basis aliphatischer und/oder cycloaliphatischer Diisocyanate,
C) einen Monoalkohol oder ein Monoalkoholgemisch, das unterhalb von 23°C in fester und oberhalb von 125°C in flüssiger Form vorliegt,
D) mindestens einen, die Umsetzung von Uretdiongruppen mit Hydroxylgruppen beschleunigenden Aushärtekatalysator, gegebenenfalls
E) eine gegenüber Carboxylgruppen reaktive Gruppen aufweisende Komponente eines mittleren Molekulargewichtes von 200 bis 5000, und gegebenenfalls
F) weitere aus der Pulverlacktechnologie bekannte Hilfs- und Zusatzstoffe,
mit der Maßgabe, dass die Komponenten A), B) und C) in solchen Mengenverhältnissen vorliegen, dass auf jede Hydroxylgruppe der Komponenten A) und C) 0,8 bis 2,2 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, die Komponenten A) und gegebenenfalls E) in solchen Mengenverhältnissen vorliegen, dass auf jede Carboxylgruppe der Komponente A) 0,8 bis 2,0 gegenüber Carboxylgruppen reaktive Gruppe der Komponente E) entfallen, der Anteil der Komponente C) an der Gesamtmenge der Komponenten A) bis F) von 1 bis 10 Gew.-% und der Anteil der Komponente D) an der Gesamtmenge der Komponenten A) bis F) 0,05 bis 5 Gew.-% beträgt.

Gegenstand der Erfindung ist auch die Verwendung dieses Pulverlackes zur Beschichtung beliebiger hitzeresistenter Substrate, also solchen, die sich bei den Einbrenntemperaturen nicht unerwünscht physikalisch (mechanische Eigenschaften) oder geometrisch (Form) verändern..

Die erfindungsgemäßen Pulverlacke enthalten als Komponente A) eine hydroxyfunktionelle Bindemittelkomponente, die unterhalb von 40°C in fester und oberhalb 130°C in flüssiger Form vorliegt und aus mindestens einem polymeren Polyol besteht.

Hierbei handelt es sich um beliebige aus der Pulverlacktechnologie bekannte Hydroxylgruppen aufweisende Bindemittel mit einer OH-Zahl von 15 bis 200 mg KOH/g, vorzugsweise von 25 bis 150 mg KOH/g, die ein mittleres (aus der Funktionalität und dem Hydroxylgehalt berechenbares) Molekulargewicht von 400 bis 10000, vorzugsweise von 1000 bis 5000 aufweisen und bis zu 2,0 Gew.-%, vorzugsweise bis zu 1,6 Gew.-%, besonders bevorzugt bis zu 1,2 Gew.-% an Carboxylgruppen (berechnet als COOH; Molekulargewicht = 45) enthalten können.

Geeignete Bindemittel sind beispielsweise hydroxylgruppenhaltige Polyester, Polyacrylate oder Polyurethane, wie sie z.B. in der EP-A 0 0 45 998 oder der EP-A 0 254 152 als Pulverlackbindemittel exemplarisch beschrieben sind, die auch in beliebiger Mischung untereinander eingesetzt werden können.

Bevorzugt handelt es sich bei der Polyolkomponente A) um hydroxylgruppenhaltige Polyester der genannten Art oder um beliebige Mischungen solcher Polyesterpolyole. Diese Polyesterpolyole können amorph sein und Erweichungstemperaturen (Tg) aufweisen, die - bestimmt nach der Differential-Thermoanalyse (DTA) - innerhalb des Temperaturbereiches von 40 bis 120°C, besonders bevorzugt innerhalb des Temperaturbereiches von 45 bis 110°C, liegen, oder auch semikristallin sein und Schmelzpunkte (nach DTA) im Bereich von 40 bis 130°C, besonders bevorzugt im Bereich von 50 bis 100°C, besitzen.

Als Polyolkomponente A) bevorzugt eingesetzte amorphe Polyesterpolyole sind beispielsweise solche, wie sie in der WO 91/07452 auf Seite 8, Zeile 3 bis 29 beispielhaft beschrieben sind. Bevorzugt eingesetzte semikristalline Polyesterpolyole sind ebenfalls bekannt und beispielsweise in der WO 91/07452 von Seite 8, Zeile 30 bis Seite 11, Zeile 25 oder der WO 2005/105879 von Seite 11, Zeile 6 bis Seite 12, Zeile 7 beschrieben.

In den erfindungsgemäßen Pulverlacken werden die hydroxyfunktionellen Bindemittel A) mit einer gegenüber Hydroxylgruppen reaktiven Vernetzerkomponenten B) kombiniert. Hierbei handelt es sich um unterhalb von 40°C in fester und oberhalb von 125°C in flüssiger Form vorliegende Uretdiongruppen und gegebenenfalls freie Isocyanatgruppen aufweisende Polyadditionsverbindungen, vorzugsweise um solche auf Basis aliphatischer und/oder cycloaliphatischer Diisocyanate, insbesondere um solche auf Basis von 1,6-Hexamethylendiisocyanat (HDI), 1-Isocyanato-3,3,5-trimethyl-5-isocyanatomethylcyclohexan (Isophorondiisocyanat, IPDI), 4,4'- und/oder 4,2'-Diisocyanatodicyclohexylmethan, 1,3-Diisocyanato-2(4)-methylcyclohexan oder beliebiger Gemische dieser Diisocyanate.

Die Herstellung solcher Polyadditionsverbindungen durch Umsetzung Uretdiongruppen aufweisender Polyisocyanate mit gegenüber Isocyanatgruppen reaktiven difunktionellen und gegebenenfalls monofunktionellen Verbindungen, insbesondere zweiwertigen und gegebenenfalls einwertigen Alkoholen ist prinzipiell bekannt und wird beispielsweise in DE-A 2 420 475, EP-A 0 045 996, EP-A 0 045 998, EP-A 0 639 598, EP-A 0 669 353, EP-A 1 024 158 oder WO 04/005363 beschrieben. Die als Komponente B) in Betracht kommenden Uretdiongruppen und gegebenenfalls freie Isocyanatgruppen aufweisenden Polyadditionsverbindungen weisen im allgemeinen einen Gehalt an Uretdiongruppen (berechnet als C2N2O2, Molekulargewicht = 84) von 3 bis 19 Gew.-% und einen Gehalt an freien Isocyanatgruppen (berechnet als NCO; Molekulargewicht = 42) von 0 bis 6,0 Gew.-% auf. Der Schmelzpunkt bzw. Schmelzbereich dieser Verbindungen liegt im allgemeinen innerhalb des Temperaturbereiches von 40 bis 125°C.

Als Komponente B) besonders bevorzugte Uretdiongruppen aufweisende Polyadditionsverbindungen sind solche, die einen Mindestgehalt an Carbonsäureestergruppen (berechnet als CO2; Molekulargewicht = 44) und/oder Carbonatgruppen (berechnet als CO3; Molekulargewicht = 60) von 1 Gew.-% aufweisen. Diese besonders bevorzugten Uretdiongruppen aufweisenden Polyadditionsverbindungen sind ebenfalls bereits bekannt. Ihre Herstellung kann beispielsweise wie in EP-A 0 639 598, EP-A 1 024 158, EP-B 1 063 251 oder WO 04/005363 beschrieben erfolgen.

Die erfindungsgemäßen Pulverlacken enthalten als Komponente C) Monoalkohole oder Monoalkoholgemische, die unterhalb von 23°C in fester und oberhalb von 125°C in flüssiger Form vorliegen.

Hierbei handelt es sich um beliebige gesättigte oder ungesättigte einwertige Alkohole, die aliphatisch, cycloaliphatisch oder aromatisch gebundene Hydroxylgruppen tragen und gegebenenfalls bis zu 3 Heteroatome aus der Reihe Sauerstoff, Schwefel, Stickstoff enthalten können. Geeignete Komponenten C) sind beispielsweise Monoalkohole des Molekulargewichtsbereiches 100 bis 900, wie z.B. 1-Dodecanol, 1-Tridecanol, 1-Tetradecanol, 1-Pentadecanol, 1-Hexadecanol, 1-Heptadecanol, 1-Octadecanol, (E)-9-Octadecen-1-ol, 1-Nonadecanol, 1-Eicosanol, 1-Heneicosanol, 1-Docosanol, (E)- und (Z)-13-Docosen-1-ol, 1-Tricosanol, 1-Tetracosanol, 1-Pentacosanol, 1-Hexacosanol, 1-Heptacosanol, 1-Octacosanol, 1-Nonacosanol, 1-Triacontanol, 1-Hentriacontanol, 1-Dotriacontanol, 1-Tetratriacontanol, 2- Tetradecyl-octadecanol, 2-Hexadecyl-eicosanol, Cyclohexanol, 1-Methylcyclohexanol-(1), die isomeren Decalole, Cyclopentadecanol, 4-Octylphenol, 4-tert.-Octylphenol, isomere Nonylphenole, 1-Naphthol, 2-Naphthol oder beliebige Gemische solcher Alkohole.

Ebenfalls als Komponenten C) geeignet sind Homologengemische von linearen oder verzweigten Monoalkoholen mit mittleren Molekulargewichten von 200 bis 750, wie sie beispielsweise nach bekannten Verfahren bei der technischen Synthese als primäre Produkte anfallen, sofern diese einen Schmelz- oder Erweichungsbereich im oben genannten Temperaturintervall aufweisen. Eine umfassende Übersicht über die technischen Verfahren zur Herstellung solcher Monoalkoholgemische findet sich beispielsweise in K. Noweck: "Fatty Alcohols ", Ullmann's Encyclopedia of Industrial Chemistry, Electronic Release, 7th ed. Wiley-YCH, Weinheim June 2001, DOI.-10.1002/14356007.α10_277*.* Geeignete homologe Monoalkoholgemische sind beispielsweise nach Ziegler-Verfahren (Alfol- oder Epal-Prozess), durch Hydroformylierung von α-Olefinen, z.B. nach dem SHOP-Prozess ("Shell's Higher Olefin Process"), oder nach verschiedenen oxidativen Verfahren aus Paraffinen, z.B. nach dem Baker Petrolite-Prozess (siehe z.B. US-A 4,426,329); erhältlich.

Bevorzugte Komponenten C) sind gesättigte lineare oder verzweigte aliphatische Monoalkohole mit 12 bis 50 Kohlenstoffatomen, Gemische solcher Monoalkohole oder nach einem der vorstehenden Verfahren hergestellte Homologengemische gesättigter linearer oder verzweigter Monoalkohole, die im statistischen Mittel von 18 bis 50 Kohlenstoffatome aufweisen.

Besonders bevorzugt sind gesättigte linearaliphatische Monoalkohole mit 12 bis 24 Kohlenstoffatomen und primär gebundener Hydroxylgruppe, Gemische solcher primären Monoalkohole oder nach einem der vorstehenden Verfahren hergestellte Homologengemische gesättigter primärer Monoalkohole, die im statistischen Mittel von 23 bis 50 Kohlenstoffatome aufweisen.

Die Komponente Komponenten A), B) und C) werden in dem erfindungsgemäßen Pulverlack in solchen Mengen eingesetzt, dass auf jede Hydroxylgruppe der Komponenten A) und C) 0,8 bis 2,2, vorzugsweise 1,0 bis 2,0, besonders bevorzugt 1,2 bis 1,8 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird und der Anteil der Komponente C) an der Gesamtmenge der Komponenetn A) bis F) von 1 bis 10 Gew.-%, vorzugsweise von 2 bis 8 Gew.-%, besonders bevorzugt von 3 bis 7 Gew.-% beträgt.

Zur Beschleunigung der Aushärtung enthalten die erfindungsgemäßen Pulverlacke mindestens einen, die Umsetzung von Uretdiongruppen mit Hydroxylgruppen beschleunigenden Aushärtekatalysator D).

Hierbei handelt es sich beispielsweise um beliebige anorganische oder organische Zinkverbindungen, wie z.B. Zinkoxid, Zinksulfid, Zinkcarbonat, Zinkfluorid, Zinkchlorid, Zinkbromid, Zinkiodid, Zinkphosphat, Zinkborat, Zinktitanat, Zinkhexafluorosilicat, Zinksulfit, Zinksulfat, Zinknitrat, Zinktetrafluoroborat, Zinkacetat, Zinkoctoat, Zinkcyclohexanbutyrat, Zinklaurat, Zinkpalmitat, Zinkstearat, Zinkbehenat, Zinkcitrat, Zinkgluconat, Zinkacetylacetonat, Zink-2,2,6,6-tetramethyl-3,5-heptandionat, Zinktrifluoracetat, Zinktrifluormethansulfonat und Zinkdimethyldithiocarbamat, oder beliebige Gemische solcher Verbindungen.

Ebenfalls geeignete Aushärtekatalysatoren D) sind Ammonium- oder Phosphoniumsalze mit Carboxylat-, Hydroxid- oder Fluoridanion, sowie Metallhydroxide und Metallalkoholate, wie sie beispielsweise in der WO 2005/105879 (Seite 8, Zeile 14 bis Seite 10, Zeile 21) explizit beschrieben sind.

Bevorzugte Katalysatoren D) sind Zinkverbindungen der genannten Art. Ganz besonders bevorzugter Katalysator D) ist Zinkacetylacetonat.

Die Aushärtekatalysatoren D) kommen in den erfindungsgemäßen Pulverlacken in einer Menge von 0,05 bis 5 Gew.-%, vorzugweise von 0,1 bis 3 Gew.-% bezogen auf die Gesamtmenge der Komponenten A) bis F) zum Einsatz.

Bei der in den erfindungsgemäßen Pulverlacken gegebenenfalls enthaltenen Komponente E) handelt es sich um gegenüber Carboxylgruppen reaktive Gruppen aufweisende Verbindungen eines mittleren Molekulargewichtes von 200 bis 5000, vorzugsweise von 200 bis 2000, besonders bevorzugt von 250 bis 1000, wie sie in der Pulverlacktechnologie im allgemeinen als Vernetzerkomponenten für carboxylgruppenhaltige Pulverlackbindemittel zum Einsatz kommen.

Geeignete Komponenten E) sind beispielsweise die an sich bekannten Polyepoxide, wie Triglycidylisocyanurat (TGIC) und Triglycidylurazol oder deren Oligomere, Glycidylether, wie z.B. solche auf Basis von Bisphenol A, glycidylfunktionelle Copolymerisate, wie z.B. die bekannten Glycidylmethacrylate (GMA-Harze) aber auch Glycidylester, wie z.B. die der Phthalsäure, Terephthalsäure, Trimellitsäure, Tetrahydro- und Hexahydrophthalsäure, oder beliebige Gemische solcher Polyepoxide.

Geeignete Komponenten E) sind beispielsweise auch β-Hydroxyalkylamidgruppen aufweisende Verbindungen, wie sie in der EP-A 0 322 834 als Vernetzerkomponenten für carboxylgruppenhaltige Polyester beschrieben sind. Die Herstellung solcher β-Hydroxyalkylamide erfolgt im allgemeinen durch basenkatalysierte Umsetzung organischer Polycarbonsäureester mit β-Hydroxyalkylaminen bei Temperaturen bis zu 200°C unter gleichzeitigem destillativen Entfernen des dabei entstehenden Alkohols.

Bevorzugte kommen in den erfindungsgemäßen Pulverlacken als gegebenenfalls mitzuverwendende Komponente D) Terephthalsäurediglycidylester, Trimellithsäuretriglycidylester, TGIC oder β-Hydroxyalkylamide auf Basis gesättigter Dicarbonsäureester mit 4 bis 12 Kohlenstoffatomen im Dicarbonsäureteil oder beliebige Gemische dieser Verbindungen zum Einsatz. Besonders bevorzugt besteht die Komponente D) aus Gemischen von 70 bis 82 Gew.-% Terephthalsäurediglycidylester und 18 bis 30 Gew.-% Trimellitsäuretriglycidylester.

Falls überhaupt wird die Komponente E) in dem erfindungsgemäßen Pulverlack vorzugsweise in solchen Mengen eingesetzt, dass auf jede Carboxylgruppe der Komponente A) eine mindestens äquimolare Menge an gegenüber Carboxylgruppen reaktiven Gruppen der Komponente E) entfällt. Gegebenenfalls, zum Beispiel bei Verwendung von Polyolkomponenten A) mit besonders niedriger Schmelzviskosität, kann aber auch bereits die Umsetzung mit einer molar unterschüssigen Menge an gegenüber Carboxylgruppen reaktiven Gruppen ausreichen, um die inhibierende Wirkung der Carboxylgruppen aufzuheben, so dass das Verhältnis von Carboxylgruppen zu gegenüber Carboxylgruppen reaktiven Gruppen in den erfindungsgemäßen Pulverlacken von 0,8 bis 2,0, vorzugsweise von 1,0 bis 1,5, besonders bevorzugt von 1,0 bis 1,3 betragen kann.

Gegebenenfalls kann der erfindungsgemäße Pulverlack weitere aus der Pulverlacktechnologie bekannte Hilfs- und Zusatzstoffe F) enthalten.

Hierbei handelt es sich beispielsweise um übliche Polyurethan-Katalysatoren, wie z.B. Aluminium-tri(ethylacetoacetat), Zinn(II)-hexanoat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn-(IV)-diacetat, Molybdänglykolat 1,5-Diazabicyclo[4.3.0]non-5-en oder 1,8-Diazabicyclo[5.4.0]-undec-7-en, oder um beliebige Gemische solcher Katalysatoren.

Eine weitere Klasse gegebenenfalls mitzuverwendender Katalysatoren sind die üblichen literaturbekannten Verbindungen, die geeignet sind, die Reaktion gegebenenfalls in der Komponente A) vorliegender Carboxylgruppen mit den gegenüber Carboxylgruppen reaktiven Gruppen der Komponente E) zu beschleunigen, beispielsweise Ammoniumsalze, wie z.B. Tetrabutylammoniumchlorid, -bromid oder -iodid, Tetraethylammoniumchlorid, -bromid oder -iodid, Trimethylbenzylammoniumchlorid, Dodecyldimethyl-(2-phenoxyethyl)-ammoniumbromid oder Diethyl-(2-hydroxyethyl)-methylammoniumbromid, Phosphoniumsalze, wie z.B. Tetrabutylphosphoniumchlorid, -bromid oder -iodid, Tetraethylphosphoniumchlorid, -bromid oder -iodid, Tetramethylphosphoniumbromid, Octadecyl- tributylphoshoniumbromid, Hexadecyltributylphosphoniumbromid, Katalysatoren mit Imidazolstruktur, wie z.B. Imidazol, 2-Methylimidazol, 2-Methyl-4-ethylimidazol, 2-[(N-Benzylanilino)-methyl]-2-imidazolinphosphat oder 2-Benzyl-2-imidazolinhydrochlorid, oder tert. Amine, wie z.B. N,N-Dimethylcyclohexylamin, N,N-Diethylcyclohexylamin, N-Methylpiperidin, N-Methylmorpholin, Pentamethyldiethylentriamin, N,N'-Dimethylpiperazin oder 1,4-Diazabicyclo[2,2,2]octan.

Bevorzugte gegebenenfalls mitzuverwendende Katalysatoren F) sind Ammonium- und Phosphoniumsalze der vorstehend genannten Art.

Falls überhaupt, werden diese zusätzlichen Katalysatoren F) in einer Menge bis zu 4 Gew.-%, vorzugsweise bis zu 2,4 Gew.-%, bezogen auf die Gesamtmenge der Komponenten A) bis F) eingesetzt, mit der Maßgabe, dass die Gesamtmenge aller im Pulverlack enthaltenen Katalysatoren D) und gegebenenfalls F) 0,05 bis 5 Gew.-%, vorzugsweise 0,1 bis 3 Gew.-% beträgt, wobei der Anteil der Zink-Katalysatoren D) an dieser Gesamtmenge D) und F) mindestens 20 Gew.-% beträgt.

Weitere gegebenenfalls mitzuverwendende Hilfs- und Zusatzstoffe F) sind beispielsweise Verlaufsmittel, wie z.B. Polybutylacrylat oder solche auf Basis von Polysilikonen, Lichtschutzmittel, wie z.B. sterisch gehinderte Amine, UV-Absorber, wie z.B. Benztriazole oder Benzophenone, Pigmente, wie z.B. Titandioxid, oder auch Farbstabilisatoren gegen die Gefahr der Überbrennvergilbung, wie z.B. gegebenenfalls inerte Substituenten aufweisende Trialkyl- und/oder Triarylphosphite, wie Triethylphosphit, Triisodecylphosphit, Triphenylphosphit oder Trisnonylphenylphosphit.

Zur Herstellung des fertigen Pulverlackes werden die Bestandteile A), B), C), D) und gegebenenfalls E) und F) innig miteinander vermischt und anschließend in der Schmelze zu einem homogenen Material vereinigt. Dies kann in geeigneten Aggregaten, beispielsweise beheizbaren Knetern, vorzugsweise jedoch durch Schmelzextrusion erfolgen, wobei die Extrusionstemperatur im allgemeinen so gewählt wird, dass ein Maximum an Scherkräften auf die Mischung einwirkt. Um eine vorzeitige Vernetzung des Pulverlackes zu vermeiden, sollte dabei allerdings eine Temperaturobergrenze von 110°C nicht überschritten werden.

Die Reihenfolge der Vereinigung der Einzelkomponenten A) bis F) ist bei diesem Verfahren weitgehend frei wählbar.

Eine im Sinne der vorliegenden Erfindung ebenfalls bevorzugte Art zur Herstellung eines fertigen Pulverlackes ist es beispielsweise auch, in einem ersten Schritt nur einen Teil der Einzelkomponenten, beispielsweise nur die Komponenten A), C) und D) oder die Komponenten B) und D) oder beispielsweise die Komponenten A), C), D) und E), in Schmelze, vorzugsweise während oder unmittelbar im Anschluss an die Herstellung der Komponenten A) oder B), innig miteinander zu vermischen und erst zu einem späteren Zeitpunkt, in einem zweiten Schritt, zu dem dann resultierenden, aus den Komponenten A), C) und D) oder B) und D) oder den Komponenten A), C), D) und E) bestehenden lagerstabilen homogenen Material die übrigen Komponenten hinzuzufügen und alles gemeinsam zu extrudieren. Es ist darüber hinaus auch möglich, beliebige Konzentrate (Masterbatches) von Rezepturbestandteilen, beispielsweise solche der Monoalkohole C) und/oder der Katalysatoren D) und/oder der Vernetzerkomponenten E) und/oder weiterer Hilfs-und Zusatzstoffe F) in einem Teil der Bindemittelkomponente A), zu formulieren und diese dann bei der Pulverlackherstellung den übrigen Komponenten zu einem erfindungsgemäßen Pulverlack hinzuzufügen.

Unabhängig vom gewählten Verfahren werden die Mengenverhältnisse der Einzelkomponenten A), B), C), D), E) und F) im übrigen so gewählt, dass, wie bereits oben aufgeführt, auf jede Hydroxylgruppe der Komponenten A) und C) 0,8 bis 2,2, vorzugsweise 1,0 bis 2,0, besonders bevorzugt 1,2 bis 1,8 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, und auf jede Carboxylgruppe der Komponente A) 0,8 bis 2,0, vorzugsweise 1,0 bis 1,5, besonders bevorzugt 1,0 bis 1,3 gegenüber Carboxylgruppen reaktive Gruppen der Komponente E) entfallen.

Die extrudierte Masse wird nach Abkühlen auf Raumtemperatur und nach einer geeigneten Vorzerkleinerung, z.B. durch Zerhacken oder Schroten, zu einem Pulverlack gemahlen und durch Sieben von den Kornanteilen oberhalb der gewünschten Korngröße, beispielsweise oberhalb 0,1 mm, befreit.

Die so hergestellten Pulverlackformulierungen können nach üblichen Pulverauftragsverfahren, wie z.B. elektrostatischem Pulversprühen oder Wirbelsintern, auf die zu überziehenden Substrate aufgebracht werden. Die Härtung der Überzüge erfolgt durch Erhitzen auf Temperaturen von 100 bis 220°C, vorzugsweise jedoch bei für Polyurethanpulverlacke niedrigen Temperaturen von 110 bis 160°C, besonders bevorzugt bei Temperaturen von 120 bis 150°C, beispielsweise während eines Zeitraums von ca. 5 bis 60 Minuten.

Die erfindungsgemäßen abspalterfreien PUR-Pulverlacke, die als Formulierungsbestandteile monofunktionelle Alkohole oder Gemische solcher Alkohole enthalten, liefern bereits bei Einbrenntemperaturen ab 100°C harte, elastische, lösemittel- und chemikalienbeständige Beschichtungen, die sich trotz der niedrigen Einbrenntemperatur durch hervorragende optische Eigenschaften, insbesondere einen sehr guten Verlauf, auszeichnen, während analoge Uretdionpulverlacke ohne Monoalkoholzusatz unter ansonsten gleichen Bedingungen Beschichtungen mit erheblichen Verlaufsstörungen und starker Oberflächenstruktur ergeben.

Die erfindungsgemäßen Pulverlacke gestatten es dabei auf sehr einfache Weise, den Glanzgrad einer Beschichtung in einem sehr weiten Bereich gezielt einzustellen. In Abhängigkeit von Art und Kettenlänge der eingesetzten Monoalkoholkomponente C) lassen sich hochglänzende bis tiefmatte, in allen Fällen gleichzeitig aber sehr glatte Oberflächen erhalten. So führt die Mitverwendung der bevorzugten primären linearaliphatischen Monoalkohole mit 12 bis 24 Kohlenstoffatomen in der Regel zu hochglänzende Beschichtungen, während die Verwendung höhermolekularer Homologengemische gesättigter primärer Monoalkohole, wie sie beispielsweise von Fa. Baker-Petrolite unter der Bezeichnung Unilin® vermarktet werden, matte Lackfilme ergibt.

Erfindungsgemäß können beliebige hitzeresistente Substrate, wie beispielsweise solche aus Metallen, Glas, Holz oder temperaturbeständigen Kunststoffen beschichtet werden.

Die nachfolgenden Beispiele dienen zur weiteren Erläuterung der Erfindung.

### Beispiele

Alle Prozentangaben, mit Ausnahme der Glanzwerte, beziehen sich auf Gewichtsprozente.

### Ausgangsverbindungen

### Polyol A)

Hydroxylgruppenhaltiger Polyester, hergestellt aus 47,3 Gew.-Teilen Terephthalsäure, 44,6 Gew. Teilen Neopentylglykol, 2,9 Gew.-Teilen Adipinsäure und 5,2 Gew.-Teilen Trimellitsäureanhydrid.

| | |
|---|---|
| OH-Zahl: | 40 mg KOH/g |
| Säurezahl: | 13 mg KOH/g |
| Carboxylgruppengehalt: | 1,04% |
| Schmelzbereich (DTA): | 58 bis 62°C |

### Uretdiongruppenhaltige Polyadditionsverbindungen B) (gemäß EP-A- 0 639 598)

### a) Herstellung eines Estergruppen aufweisenden Diols:

901 g 1,4-Butandiol und 1712 g ε-Caprolacton werden bei Raumtemperatur unter Stickstoffatmosphäre vermischt, mit 0,3 g Zinn(II)octoat versetzt und anschließend 5 Stunden auf 160°C erhitzt. Nach Abkühlen auf Raumtemperatur erhält man ein farbloses, flüssiges Produkt mit folgenden Kenndaten:

| | |
|---|---|
| Viskosität (23°C): | 180 mPas |
| OH-Zahl: | 416 mg KOH/g |
| freies Caprolacton: | 0,2 % |
| mittleres Molekulargewicht: | 269 (aus OH-Zahl ber.) |
| Estergruppengehalt (ber.): | 25,3 % |

### b) Herstellung Uretdiongruppen aufweisenden Komponente B):

1000 g (4,05 val) eines uretdiongruppenhaltigen Polyisocyanates auf Basis von 1-Isocyanato-3,3,5-trimethyl-5-isocyanatomethyl-cyclohexan (IPDI) mit einem Gehalt an freien Isocyanatgruppen von 17,0 % und einem Gehalt an Uretdiongruppen (bestimmt durch Heißtitration) von 20,7 % werden unter trockenem Stickstoff auf 80°C erwärmt. Anschließend gibt man innerhalb von 30 Min. eine Mischung von 436 g (3,24 val) des Estergruppen aufweisenden Diols aus a) und 105 g (0,81 val) 2-Ethyl-1-hexanol zu und rührt bei einer Reaktionstemperatur von max. 105°C, bis der NCO-Gehalt des Reaktionsgemisches nach ca. 2 h auf einen Wert von 0,4 % abgesunken ist. Die Schmelze wird zum Erkalten auf ein Blech gegossen und man erhält ein praktisch farbloses Festharz mit folgenden Kenndaten:

| | |
|---|---|
| NCO-Gehalt: | 0,4 % |
| Uretdiongruppen-Gehalt (ber.): | 13,4% |
| NCO-Gehalt gesamt (ber.): | 13,8 % |
| monomeres IPDI: | 0,09 % |
| Schmelzpunkt: | 80 bis 82°C |

### Monoalkohole C)

| | |
|---|---|
| C1) Stearylalkohol | (Molekulargewicht: 270, Smp.: 58°C) |
| C2) Tetradecanol | (Molekulargewicht: 214, Smp.: 39°C) |
| C3) Eicosanol | (Molekulargewicht: 298, Smp.: 65°C) |
| C4) Docosanol | (Molekulargewicht: 326, Smp.: 72°C) |
| C5) Unilin® 425 * | (OH-Zahl: 105, mittleres Molekulargewicht: 460, Smp.: 91°C) |
| C6) Unilin® 550 * | (OH-Zahl: 83, mittleres Molekulargewicht: 550, Smp.: 99°C) |
| C7) Unilin® 700 * | (OH-Zahl: 65, mittleres Molekulargewicht: 700, Smp.: 106°C) |

| | |
|---|---|
| * synthetisch hergestellte Homologengemische gesättigter linearaliphatischer primärer Monoalkohole mit primär gebundenen OH-Gruppen, enthalten bis zu 20 % nichtfunktionelle Polyethylenketten. Handelsprodukte der Fa. Baker Petrolite (Sugar Land, Texas) | |

### Katalysator D) Zinkacetylacetonat

### Gegenüber Carboxylgruppen reaktive Komponenten E)

Araldit^{®} PT 910, Handelsprodukt der Fa. Huntsman Advanced Materials (Basel, Schweiz):
Gemisch aus Terephthalsäurediglycidylester (70 bis 82 %) und Trimellitsäuretriglycidylester (18 bis 30 %), Epoxidäquivalent 150 g/val Epoxidgruppe.

### Beispiel 1 (erfindungsgemäß und Vergleich)

| | |
|---|---|
| 41,7 Gew.-Teile | des hydroxylgruppenhaltigen Polyesters A) mit einem Gehalt an Carboxylgruppen von 1,0 % wurden mit |
| 17,3 Gew.-Teilen | der Polyadditionsverbindung B), entsprechend einem Äquivalentverhältnis von Gesamt-NCO zu OH von 1,5:1, |
| 2,2 Gew.-Teile | des Monoalkohols C1) (Stearylalkohol) |
| 1,0 Gew.-Teilen | Katalysator D) (Zinkacetylacetonat) |
| 2,0 Gew.-Teilen | der Komponente E) (Araldit^{®} PT 910), entsprechend einem Äquivalentverhältnis von Carboxylgruppen zu gegenüber Carboxylgruppen reaktiven Gruppen von 1,4:1, |
| sowie als Hilfs- und Zusatzmittel F) mit | |
| 1,0 Gew.-Teilen | Tetrabutylammoniumbromid (weiterer Katalysator), |
| 1,5 Gew.-Teilen | eines handelsüblichen Verlaufsmittels (Resiflow^{®} PV 88, Fa. Worlee-Chemie, Hamburg, Deutschland) |
| 0,3 Gew.-Teilen | Benzoin und |
| 30,0 Gew.-Teilen | eines Weißpigmentes (Kronos^{®} 2160, Fa. Kronos Titan, Leverkusen, Deutschland) |

gründlich gemischt und anschließend mit Hilfe eines Buss Cokneters vom Typ PLK 46 bei 150 U/min und einer Gehäusetemperatur von 40°C im Einzugsbereich sowie an der Welle bzw. von 80°C im Verfahrensteil homogenisiert, wobei Massetemperaturen von 95 bis 100°C erreicht wurden. Die erstarrte Schmelze wurde mit Hilfe einer Sichtermühle ACM II (Fa. Hosokawa Mikropul) mit einem 90 µm Sieb gemahlen und gesiebt.

Die Gelierzeit (bestimmt nach DIN 55 990, Teil 8, Punkt 5.1) dieses erfindungsgemäßen Pulverlackes betrug bei 160°C 106 s.

Zum Vergleich wurde auf die gleiche Weise aus

| | |
|---|---|
| 43,2 Gew.-Teilen | des Polyesters A), |
| 17,9 Gew.-Teilen | der Polyadditionsverbindung B), |
| 1,0 Gew.-Teilen | des Katalysators D) (Zinkacetylacetonat), |
| 2,1 Gew.-Teilen | der Komponente E) (Araldit^{®} PT 910), |
| 1,0 Gew.-Teilen | Tetrabutylammoniumbromid, |
| 1,5 Gew.-Teilen | dem Verlaufsmittel Resiflow^{®} PV 88, |
| 0,3 Gew.-Teilen | Benzoin und |
| 33,0 Gew.-Teilen | des Weißpigmentes Kronos^{®} 2160 |

ein Pulverlack hergestellt.

Das Äquivalentverhältnis von Gesamt-NCO zu OH lag wie im vorstehend beschriebenen erfindungsgemäßen Pulverlack bei 1,5:1, das Äquivalentverhältnis von Carboxylgruppen zu gegenüber Carboxylgruppen reaktiven Gruppen ebenfalls bei 1,4:1. Die Gelierzeit dieses Pulverlackes betrug bei 160°C 123 s.

Die beiden so erhaltenen Pulverlacke wurden mit einer ESB-Becherpistole bei einer Hochspannung von 70 KV auf entfettete Stahlbleche gespritzt und jeweils 15 min bei einer Temperatur von 140°C und 10 min bei 160°C ausgehärtet. Bei Schichtdicken von etwa 60 µm wurden folgende lacktechnischen Eigenschaften gefunden:

| | Erfindungsgemäßer Pulverlack | | Vergleich | |
|---|---|---|---|---|
| Einbrennbedingungen | 15 min/140°C | 10 min/160°C | 15 min/140°C | 10 min/160°C |
| Erichsentiefung [mm] ^{a)} | 1 | 9 | 9 | 9 |
| Lösemittelbeständigkeit ^{b)} | 50/0-1 | 50 / 0-1 | 50 / 0-1 | 50 / 0-1 |
| Glanz ^{c)} (20° / 60°) | 89 / 100 | 87 / 99 | 69 / 88 | 73 / 93 |
| Verlauf visuell | sehr gut | sehr gut | leichte Struktur | leichte Struktur |

| | | | | |
|---|---|---|---|---|
| ^{a)} nach DIN EN ISO 1520 ^{b)} Anzahl der Doppelhübe mit Aceton-getränktem Wattebausch / Beurteilung (0 = Film intakt, 1 = Filmoberfläche angeweicht, 2 = Film bis zum Untergrund angequollen, 3 = Film aufgelöst, m = matt, Glanzverlust) ^{c)} nach DIN 67530; 20° bzw. 60° Reflexionswinkel | | | | |

Der Vergleich zeigt, dass beide Pulverlacke bei 160°C vollständig vernetzte lösemittelbeständige Filme ergeben. Der erfindungsgemäße Pulverlack, der zusätzlich Stearylalkohol als Bindemittelbestandteil enthält, liefert, wie insbesondere die 20°-Glanzwerte zeigen, dabei eine Beschichtung mit deutlich besserem Verlauf.

### Beispiele 2 - 8

Nach dem in Beispiel 1 beschriebenen Verfahren wurden ausgehend von den dort beschriebenen Rohstoffen unter Mitverwendung unterschiedlicher Monoalkohole C) weiß pigmentierte Pulverlacke hergestellt und mit einer ESB-Becherpistole bei einer Hochspannung von 70 KV auf entfettete Stahlbleche gespritzt. Die Lacke wurden anschließend jeweils 10 min bei 160°C eingebrannt. Die nachfolgende Tabelle zeigt die Zusammensetzungen (Gew.-Teile) der Pulverlacke sowie die lacktechnischen Daten der daraus erhaltenen Beschichtungen (Bedeutung der Fußnoten ^{a) - d)} und Beurteilung wie in Beispiel 1).

Die Beispiele belegen, dass die erfindungsgemäßen Pulverlacke zu Beschichtungen mit einem gegenüber dem Vergleichspulverlack aus Beispiel 1 deutlich verbessertem Verlauf führen. Die Beispiele zeigen darüber hinaus, dass sich in Abhängigkeit von Art und Menge der eingesetzten Monoalkohole C) der Glanzgrad der erfindungsgemäßen Pulverlacke gezielt einstellen lässt. Während die primären linearaliphatischen Monoalkohole C2) - C4) hochglänzende Lackfilme ergeben, führen die höhermolekularen Homologengemische gesättigter primärer Monoalkohole C5) - C7) zu matten, in allen Fällen aber sehr glatt verlaufenen Beschichtungen.

| Beispiel | 2 | 3 | 4 | 5 | 6 | 7 | 8 |
|---|---|---|---|---|---|---|---|
| Polyesterpolyol A) | 40,8 | 37,9 | 34,4 | 37,7 | 32,6 | 32,8 | 33,8 |
| Uretdionvemetzer B) | 18,3 | 19,2 | 20,7 | 18,1 | 19,9 | 19,0 | 17,7 |
| Monoalkohol C2) | 2,4 | - | - | - | - | - | - |
| Monoalkohol C3) | - | 4,5 | - | - | - | - | - |
| Monoalkohol C4) | - | - | 6,7 | - | - | - | - |
| Monoalkohol C5) | - | - | - | 5,8 | 9,3 | - | - |
| Monoalkohol C6) | - | - | - | - | - | 10,0 | - |
| Monoalkohol C7) | - | - | - | - | - | - | 10,3 |
| Zinkacetylacetonat D) | 1,0 | 1,0 | 1,0 | 1,0 | 1,0 | 1,0 | 1,0 |
| Araldit PT 910 E) | 1,7 | 1,6 | 1,4 | 1,6 | 1,4 | 1,4 | 1,4 |
| Tetrabutylammonium bromid | 1,0 | 1,0 | 1,0 | 1,0 | 1,0 | 1,0 | 1,0 |
| Resiflow^{®} PV 88 | 1,5 | 1,5 | 1,5 | 1,5 | 1,5 | 1,5 | 1,5 |
| Benzoin | 0,3 | 0,3 | 0,3 | 0,3 | 0,3 | 0,3 | 0,3 |
| Kronos^{®} 2160 | 33,0 | 33,0 | 33,0 | 33,0 | 33,0 | 33,0 | 33,0 |
| Äquivalentverhältnis | 1,5 | 1,5 | 1,5 | 1,5 | 1,5 | 1,5 | 1,5 |
| NCO:OH | | | | | | | |
| Äquivalentverhältnis COOH : Epoxid | 1,2 | 1,2 | 1,2 | 1,2 | 1,2 | 1,2 | 1,2 |
| Erichsentiefung [mm]^{a)} | 9,0 | 8,0 | 7,0 | 8,9 | 6,4 | 5,5 | 5,5 |
| Glanz^{c)} (20° / 60°) | 79/95 | 85/97 | 82/97 | 24/62 | 3/12 | 2/15 | 6 / 25 |
| Verlauf visuell | sehr gut | sehr gut | sehr gut | sehr gut | sehr gut | sehr gut | sehr gut |
| Lösemittelbeständigkeit ^{d)} | 50/0-1 | 50/0-1 | 50/0-1 | 50/1 | 50/1 | 50/0-1 | 50 / 0 |

## Patentansprüche

1. Polyurethan-Pulverlack, enthaltend in Mischung
A) eine unterhalb von 40°C in fester und oberhalb von 130°C in flüssiger Form vorliegende hydroxyfunktionelle Bindemittelkomponente mit einer OH-Zahl von 15 bis 200 mg KOH/g, einem mittleren Molekulargewicht von 400 bis 10000 und einem Gehalt an Carboxylgruppen (berechnet als COOH; Molekulargewicht = 45) von bis zu 2,0 Gew.-%,
B) eine Uretdiongruppen und gegebenenfalls freie Isocyanatgruppen aufweisende Polyadditionsverbindung auf Basis aliphatischer und/oder cycloaliphatischer Diisocyanate,
C) einen Monoalkohol oder ein Monoalkoholgemisch, das unterhalb von 23°C in fester und oberhalb von 125°C in flüssiger Form vorliegt,
D) mindestens einen, die Umsetzung von Uretdiongruppen mit Hydroxylgruppen beschleunigenden Aushärtekatalysator,
E) gegebenenfalls eine gegenüber Carboxylgruppen reaktive Gruppen aufweisende Komponente eines mittleren Molekulargewichtes von 200 bis 5000,
und gegebenenfalls
F) weitere aus der Pulverlacktechnologie bekannte Hilfs- und Zusatzstoffe,
mit der Maßgabe, dass die Komponenten A), B) und C) in solchen Mengenverhältnissen vorliegen, dass auf jede Hydroxylgruppe der Komponenten A) und C) 0,8 bis 2,2 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, die Komponenten A) und gegebenenfalls E) in solchen Mengenverhältnissen vorliegen, dass auf jede Carboxylgruppe der Komponente A) 0,8 bis 2,0 gegenüber Carboxylgruppen reaktive Gruppe der Komponente E) entfallen, der Anteil der Komponente C) an der Gesamtmenge der Komponenten A) bis F) von 1 bis 10 Gew.-% und der Anteil der Komponente D) an der Gesamtmenge der Komponenten A) bis F) 0,05 bis 5 Gew.-% beträgt.

2. Pulverlack gemäß Anspruch 1, **dadurch gekennzeichnet, dass** die Komponente A) aus einem Hydroxylgruppen aufweisenden Polyester mit einer OH-Zahl von 25 bis 200 und einem mittleren Molekulargewicht von 1000 bis 5000 besteht.

3. Pulverlack gemäß Anspruch 1 und 2, **dadurch gekennzeichnet, dass** es sich bei dem Hydroxylgruppen aufweisenden Polyester der Komponente A) um einen amorphen Polyester mit einer Erweichungstemperatur (Tg) innerhalb des Temperaturbereiches von 40 bis 120°C und/oder einen semikristallinen Polyester mit einem Schmelzpunkt im Bereich von 40 bis 130°C handelt.

4. Pulverlack gemäß Anspruch 1, **dadurch gekennzeichnet, dass** die Komponente B) aus einer Uretdiongruppen und gegebenenfalls freie Isocyanatgruppen aufweisenden Polyadditionsverbindung auf Basis von Hexamethylendiisocyanat, Isophorondiisocyanat, 4,4'- und/oder 4,2'-Diisocyanatodicyclohexylmethan, 1,3-Diisocyanato-2(4)-methylcyclohexan oder beliebiger Gemische dieser Diisocyanate besteht.

5. Pulverlack gemäß Ansprüche 1 bis 3, **dadurch gekennzeichnet, dass** die Komponente B) aus einer Uretdiongruppen und gegebenenfalls freie Isocyanatgruppen aufweisenden Polyadditionsverbindung mit einem Mindestgehalt an Carbonsäureestergruppen (berechnet als CO₂; Molekulargewicht = 44) und/oder Carbonatgruppen (berechnet als CO₃; Molekulargewicht = 60) von 1 Gew.-% besteht.

6. Pulverlack gemäß Ansprüche 1 bis 4, **dadurch gekennzeichnet, dass** die Komponente C) aus einem gesättigten linearen oder verzweigten aliphatischen Monoalkohol mit 12 bis 50 Kohlenstoffatomen, einem Gemisch solcher Monoalkohole oder einem Homologengemisch gesättigter linearer oder verzweigter Monoalkohole, die im statistischen Mittel von 18 bis 50 Kohlenstoffatome aufweisen, besteht.

7. Pulverlack gemäß Anspruch 5, **dadurch gekennzeichnet, dass** die Komponente C) aus einem gesättigten linearaliphatischen Monoalkohol mit 12 bis 24 Kohlenstoffatomen und primär gebundener Hydroxylgruppe oder einem Gemisch solcher Monoalkohole besteht.

8. Pulverlack gemäß Anspruch 5, **dadurch gekennzeichnet, dass** die Komponente C) aus einem Homologengemisch gesättigter linearer Monoalkohole, die im statistischen Mittel von 23 bis 50 Kohlenstoffatome aufweisen und primär gebundener Hydroxylgruppe tragen, besteht.

9. Pulverlack gemäß Ansprüche 1 bis 8, **dadurch gekennzeichnet, dass** als Aushärtekatalysator D) mindestens eine anorganische oder organischen Zinkverbindung verwendet wird.

10. Pulverlack gemäß Anspruch 9, **dadurch gekennzeichnet, dass** als Aushärtekatalysator D) Zinkacetylacetonat verwendet wird.

11. Pulverlack gemäß Ansprüche 1 bis 8, **dadurch gekennzeichnet, dass** als Aushärtekatalysator D) mindestens ein Ammonium- oder Phosphoniumsalz mit Carboxylat-, Hydroxid- oder Fluoridanion verwendet wird.

12. Pulverlack gemäß Ansprüche 1 bis 8, **dadurch gekennzeichnet, dass** als Aushärtekatalysator D) mindestens ein Metallalkoholat mit einem bis zu 6-wertigen Metallkation verwendet wird.

13. Pulverlack gemäß Ansprüche 1 bis 12, **dadurch gekennzeichnet, dass** als Komponente E) Polyepoxide und/oder β-Hydroxyalkylamide verwendet werden.

14. Pulverlack gemäß Ansprüche 1 bis 13, **dadurch gekennzeichnet, dass** als Komponente E) Gemische von 70 bis 82 Gew.-% Terephthalsäurediglycidylester und 18 bis 30 Gew.-% Trimellitsäuretriglycidylester verwendet werden.

15. Pulverlack gemäß Ansprüche 1 bis 14, **dadurch gekennzeichnet, dass** als Komponente F) Tetraalkylammonium- und/oder Tetraalkylphosphoniumsalze eingesetzt werden.

16. Pulverlack gemäß Ansprüche 1 bis 15, **dadurch gekennzeichnet, dass** die Komponenten A), B) und C) in solchen Mengenverhältnissen vorliegen, dass auf jede Hydroxylgruppe der Komponenten A) und C) 1,0 bis 2,0 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, die Komponenten A) und gegebenenfalls E) in solchen Mengenverhältnissen vorliegen, dass auf jede Carboxylgruppe der Komponente A) 1,0 bis 1,5 gegenüber Carboxylgruppen reaktive Gruppe der Komponente E) entfallen, der Anteil der Komponente C) an der Gesamtmenge der Komponenten A) und C) von 2 bis 7 Gew.-% und der Anteil der Komponente D) an der Gesamtmenge der Komponenten A) bis E) 0,1 bis 3 Gew.-% beträgt.

17. Verwendung der Pulverlacke gemäß Ansprüche 1 bis 16 zur Beschichtung von Substraten.

18. Substrate, beschichtet mit Polymerfilmen erhältlich aus Pulverlacken gemäß Ansprüchen 1 bis 16.

## Claims

1. Polyurethane powder lacquer, containing in a mixture
A) a hydroxyfunctional binder component present in solid form below 40°C and in liquid form above 130°C, with an OH number of 15 to 200 mg KOH/g, a mean molecular weight of 40 to 10,000 and a content of carboxyl groups (calculated as COOH; molecular weight = 45) of up to 2.0 wt. %,
B) a polyaddition compound comprising uretdione groups and optionally free isocyanate groups and based on aliphatic and/or cycloaliphatic diisocyanates,
C) a monoalcohol or a monoalcohol mixture that is present in solid form below 23°C and in liquid form above 125°C,
D) at least one curing catalyst accelerating the reaction of uretdione groups with hydroxyl groups, optionally
E) a component with a mean molecular weight of 200 to 5000 and comprising groups reactive to carboxyl groups,
and optionally
F) further auxiliary substances and additives known from powder lacquer technology,
with the proviso that the components A), B) and C) are present in such quantitative amounts that 0.8 to 2.2 isocyanate groups of the component B) are available for each hydroxyl group of the components A) and C), the expression isocyanate groups of the component B) being understood as the sum of isocyanate groups present in dimeric form as uretdione groups and free isocyanate groups, the components A) and optionally E) are present in such quantitative amounts that 0.8 to 2.0 groups of the component E) reactive to carboxyl groups are available for each carboxyl group of the component A), the proportion of the component C) in the total amount of the components A) to F) is from 1 to 10 wt. %, and the proportion of the component D) in the total amount of the components A) to F) is 0.05 to 5 wt. %.

2. Powder lacquer according to claim 1, **characterised in that** the component A) comprises a hydroxyl group-containing polyester with an OH number of 25 to 200 and with a mean molecular weight of 1000 to 5000.

3. Powder lacquer according to claim 1 and 2, **characterised in that** the hydroxyl group-containing polyester of the component A) is an amorphous polyester with a softening point (Tg) within the temperature range from 40° to 120°C and/or is a semi-crystalline polyester with a melting point in the range from 40° to 130°C.

4. Powder lacquer according to claim 1, **characterised in that** the component B) comprises a polyaddition compound containing uretdione groups and optionally free isocyanate groups and based on hexamethylene diisocyanate, isophorone diisocynate, 4,4'- and/or 4,2'-diisocyanatodicyclohexylmethane, 1,3-diisocyanato-2(4)-methylcyclohexane or arbitrary mixtures of these diisocaynates.

5. Powder lacquer according to claims 1 to 3, **characterised in that** the component B) comprises a polyaddition compound containing uretdione groups and optionally free isocyanate groups and with a minimum content of carboxylic acid ester groups (calculated as CO₂; molecular weight = 44) and/or carbonate groups (calculated as CO₃; molecular weight = 60) of 1 wt. %.

6. Powder lacquer according to claims 1 to 4, **characterised in that** the component C) comprises a saturated linear or branched aliphatic monoalcohol with 12 to 50 carbon atoms, a mixture of such monoalcohols or a homologue mixture of saturated linear or branched monoalcohols that have on average 18 to 50 carbon atoms.

7. Powder lacquer according to claim 5, **characterised in that** the component C) comprises a saturated linear aliphatic monoalcohol with 12 to 24 carbon atoms and primary bound hydroxyl groups, or a mixture of such monoalcohols.

8. Powder lacquer according to claim 5, **characterised in that** the component C) comprises a homologue mixture of saturated linear monoalcohols which contain on average 23 to 50 carbon atoms and carry primary bound hydroxyl groups.

9. Powder lacquer according to claims 1 to 8, **characterised in that** at least one inorganic or organic zinc compound is used as hardening catalyst C).

10. Powder lacquer according to claim 9, **characterised in that** zinc acetyl acetonate is used as hardening catalyst C).

11. Powder lacquer according to claims 1 to 8, **characterised in that** at least one ammonium or phosphonium salt with carboxylate, hydroxide or fluoride anions is used as hardening catalyst C).

12. Powder lacquer according to claims 1 to 8, **characterised in that** at least one metal alcoholate with an up to hexavalent metal cation is used as hardening catalyst C).

13. Powder lacquer according to claims 1 to 12, **characterised in that** polyepoxides and/or β-hydroxyalkylamides are used as component D).

14. Powder lacquer according to claims 1 to 13, **characterised in that** mixtures of 70 to 82 wt. % terephthalic acid diglycidyl ester and 18 to 30 wt. % of trimellitic acid triglycidyl ester are used as component D).

15. Powder lacquer according to claims 1 to 14, **characterised in that** tetraalkylammonium and/or tetraalkylphosphonium salts are used as component E).

16. Powder lacquer according to claims 1 to 15, **characterised in that** the components A), B) and C) are present in quantitative amounts such that 1.0 to 2.0 isocyanate groups of the component B) are available for each hydroxyl group of the components A), and C), the expression isocyanate groups of the component B) being understood to mean the sum of isocyanate groups present in dimeric form as uretdione groups and free isocyanate groups, the components A) and optionally E) are present in quantitative amounts such that 1.0 to 1.5 groups of the component E) reactive to carboxyl groups are available for each carboxyl group of the component A), and the proportion of the component C) in the total amount of the components A) and C) is from 2 to 7 wt. % and the proportion of the component D) in the total amount of the components A) to E) is 0.1 to 3 wt. %.

17. Use of the powder lacquers according to claims 1 to 16 for coating substrates.

18. Substrates coated with polymer films obtainable from powder lacquers according to claims 1 to 16.

## Revendications

1. Peinture en poudre de polyuréthane contenant en mélange
A) un composant liant hydroxyfonctionnel présent sous forme solide en deçà de 40°C et sous forme liquide au-delà de 130°C ayant un indice OH de 15 à 200 mg de KOH/g, une masse moléculaire moyenne de 400 à 10 000 et une teneur en groupes carboxyle (calculée en COOH ; masse moléculaire = 45) pouvant atteindre 2,0 % en masse,
B) un composé de polyaddition à base de diisocyanates aliphatiques et/ou cycloaliphatiques comportant des groupes urétodione et éventuellement des groupes isocyanate libres,
C) un monoalcool ou un mélange de monoalcools qui est présent sous forme solide en deçà de 23°C et sous forme liquide au-delà de 125°C,
D) au moins un catalyseur de durcissement accélérant la réaction des groupes urétodione avec les groupes hydroxyle,
E) éventuellement un composant comportant des groupes réactifs à l'égard des groupes carboxyle d'une masse moléculaire moyenne de 200 à 5 000,
et éventuellement
F) d'autres adjuvants et additifs connus par la technologie des peintures en poudre,
avec la condition que les composants A), B) et C) soient présents en des proportions telles qu'à chaque groupe hydroxyle des composants A) et C) correspondent 0,8 à 2,2 groupes isocyanate du composant B), où par groupes isocyanate du composant B) on entend la somme des groupes isocyanate présents sous forme dimère sous forme de groupes urétodione et des groupes isocyanate libres, que les composants A) et éventuellement E) soient présents en des proportions telles qu'à chaque groupe carboxyle du composant A) corresponde 0,8 à 2,0 groupe réactif à l'égard des groupes carboxyle du composant E), que la fraction du composant C) par rapport à la quantité totale des composants A) à F) soit de 1 à 10 % en masse et que la fraction du composant D) par rapport à la quantité totale des composants A) à F) soit de 0,05 à 5 % en masse.

2. Peinture en poudre selon la revendication 1 **caractérisée en ce que** le composant A) consiste en un polyester comportant des groupes hydroxyle ayant un indice OH de 25 à 200 et une masse moléculaire moyenne de 1 000 à 5 000.

3. Peinture en poudre selon la revendication 1 ou 2 **caractérisée en ce que** le polyester comportant des groupes hydroxyle du composant A) est un polyester amorphe ayant une température de ramollissement (Tg) à l'intérieur du domaine de températures de 40 à 120°C et/ou un polyester semicristallin ayant un point de fusion dans le domaine de 40 à 130°C.

4. Peinture en poudre selon la revendication 1 **caractérisée en ce que** le composant B) consiste en un composé de polyaddition comportant des groupes urétodione et éventuellement des groupes isocyanate libres à base d'hexaméthylènediisocyanate, d'isophoronediisocyanate, de 4,4'- et/ou 4,2'-diisocyanatodicyclohexylméthane, de 1,3-diisocyanato-2(4)-méthylcyclohexane ou de mélanges quelconques de ces diisocyanates.

5. Peinture en poudre selon les revendications 1 à 3 **caractérisée en ce que** le composant B) consiste en un composé de polyaddition comportant des groupes urétodione et éventuellement des groupes isocyanate libres ayant une teneur minimale en groupes ester d'acide carboxylique (calculée en CO₂ ; masse moléculaire = 44) et/ou en groupes carbonate (calculée en CO₃ ; masse moléculaire = 60) de 1 % en masse.

6. Peinture en poudre selon les revendications 1 à 4 **caractérisée en ce que** le composant C) consiste en un monoalcool aliphatique linéaire ou ramifié saturé ayant 12 à 50 atomes de carbone, un mélange de tels monoalcools ou un mélange d'homologues de monoalcools linéaires ou ramifiés saturés, qui comportent en moyenne statistique 18 à 50 atomes de carbone.

7. Peinture en poudre selon la revendication 5 **caractérisée en ce que** le composant C) consiste en un monoalcool aliphatique linéaire saturé ayant 12 à 24 atomes de carbone et un groupe hydroxyle lié de manière primaire ou en un mélange de tels monoalcools.

8. Peinture en poudre selon la revendication 5 **caractérisée en ce que** le composant C) consiste en un mélange d'homologues de monoalcools linéaires saturés qui comportent en moyenne statistique 23 à 50 atomes de carbone et qui portent un groupe hydroxyle lié de manière primaire.

9. Peinture en poudre selon les revendications 1 à 8 **caractérisée en ce que** l'on utilise comme catalyseur de durcissement D) au moins un composé du zinc inorganique ou organique.

10. Peinture en poudre selon la revendication 9 **caractérisée en ce que** l'on utilise de l'acétylacétonate de zinc comme catalyseur de durcissement D).

11. Peinture en poudre selon les revendications 1 à 8 **caractérisée en ce que** l'on utilise comme catalyseur de durcissement D) au moins un sel d'ammonium ou de phosphonium avec un anion carboxylate, hydroxyde ou fluorure.

12. Peinture en poudre selon les revendications 1 à 8 **caractérisée en ce que** l'on utilise comme catalyseur de durcissement D) au moins un alcoolate métallique avec un cation métallique qui peut être jusqu'à hexavalent.

13. Peinture en poudre selon les revendications 1 à 12 **caractérisée en ce que** l'on utilise comme composant E) des polyépoxydes et/ou des β-hydroxyalkylamides.

14. Peinture en poudre selon les revendications 1 à 13 **caractérisée en ce que** l'on utilise comme composant E) des mélanges de 70 à 82 % en masse de diglycidylester d'acide téréphtalique et 18 à 30 % en masse de triglycidylester d'acide trimellitique.

15. Peinture en poudre selon les revendications 1 à 14 **caractérisée en ce que** l'on utilise comme composant F) des sels de tétraalkylammonium et/ou tétraalkylphosphonium.

16. Peinture en poudre selon les revendications 1 à 15 **caractérisée en ce que** les composants A), B) et C) sont présents en des proportions telles qu'à chaque groupe hydroxyle des composants A) et C) correspondent 1,0 à 2,0 groupes isocyanate du composant B), où par groupes isocyanate du composant B) ont entend la somme des groupes isocyanate présents sous forme dimère sous forme de groupes urétodione et des groupes isocyanate libres, les composants A) et éventuellement E) sont présents en des proportions telles qu'à chaque groupe carboxyle du composant A) correspond 1,0 à 1,5 groupe réactif à l'égard des groupes carboxyle du composant E), la fraction du composant C) par rapport à la quantité totale des composants A) et C) est 2 à 7 % en masse et la fraction du composant D) par rapport à la quantité totale des composants A) à E) est 0,1 à 3 % en masse.

17. Utilisation des peintures en poudre selon les revendications 1 à 16 pour le revêtement de substrats.

18. Substrats revêtus avec des films polymères pouvant être obtenus à partir des peintures en poudre selon les revendications 1 à 16.
